## Europäisches Patentamt

## European Patent Office

## Office européen des brevets

(19)

(11) Veröffentlichungsnummer: **0 140 403**
**B1**

(12) # EUROPÄISCHE PATENTSCHRIFT

(45) Veröffentlichungstag der Patentschrift:
**08.04.87**

(51) Int. Cl.⁴: **G 01 F 23/00,** G 01 F 23/30

(21) Anmeldenummer: **84201174.4**

(22) Anmeldetag: **15.08.84**

(54) Schaltungsanordnung für ein Füllstandmessgerät mit einer Tastplatte.

(30) Priorität: **13.09.83 DE 3332912**

(43) Veröffentlichungstag der Anmeldung:
**08.05.85 Patentblatt 85/19**

(45) Bekanntmachung des Hinweises auf die Patenterteilung:
**08.04.87 Patentblatt 87/15**

(84) Benannte Vertragsstaaten:
**CH FR GB LI NL SE**

(56) Entgegenhaltungen:
**EP-A-0 096 432**
**CH-A-528 071**
**DE-A-2 853 360**
**DE-A-2 903 096**

(73) Patentinhaber: **KROHNE MESSTECHNIK GMBH & CO. KG, Ludwig- Krohne- Strasse 5, D-4100 Duisburg 1 (DE)**

(72) Erfinder: **van der Pol, Ronald, Dipl.- Ing., Victor- Hugostraat 27, Venlo (NL)**

(74) Vertreter: **Ackmann, Günther, Dr.- Ing., Claubergstrasse 24 Postfach 10 09 22, D-4100 Duisburg 1 (DE)**

LIBER, STOCKHOLM 1987

EP 0 140 403 B1

## Beschreibung

Die Erfindung betrifft eine Schaltungsanordnung für ein Füllstandmeßgerät mit einer Tastplatte, die mit einem Meßseil an einer mit einem Servomotor verbundenen Seiltrommel angeschlossen ist, wobei ein drehbar gelagertes Motorgehäuse in beiden Drehrichtungen federnd an ein festes Meßgerätegehäuse angekoppelt und dazwischen ein elektrischer Signalgeber angeordnet ist, an den eine Vergleichsstufe angeschlossen ist, welche ein Meßsignal mit einem dem Momentengleichgewicht entsprechenden Sollwert vergleicht und deren Fehlersignal über einen Gleichrichter einem Spannungsfrequenzwandler zugeführt wird, dessen Frequenz wiederum über einen Polaritätsschalter, der von einem an den Ausgang der Vergleichsstufe angeschlossenen Richtungsdekoder gesteuert wird, zwei der Ansteuerung des Servomotors dienenden Multivibratoren zugeführt wird.

Um durch Wellenbewegungen der Meßflüssigkeit verursachte Störungen zu beseitigen, ist aus der gemäß Art. 54 (3) EPÜ zu berücksichtigenden EP-A- 0 096 432 eine Steuereinrichtung zur wechselweisen Umschaltung durch einen Wechselschalter auf einen Steuerkreis zur Ansteuerung des Servomotors mit der von der Störgröße abgeleiteten Frequenz des Spannungs-Frequenz-Wandlers oder auf einen Steuerkreis zu verzögerten Ansteuerung mit einer von einem Oszillator gelieferten, einstellbaren Frequenz bekannt, wobei der Wechselschalter von einem Fensterdiskriminator gesteuert wird, der über ein Dämpfungsglied an das verstärkte Ausgangssignal der Vergleichsstufe angeschlossen ist. Mit der Steuerschaltung wird das abgegriffene verstärkte Differenzsignal gedämpft, so daß durch Wellenbewegungen verursachte kleinere Abweichungen vom Momentengleichgewicht nicht zu einem ständigen Hin- und Herschalten des Servomotors führen. Findet eine wirkliche Änderung des Niveaus der Meßflüssigkeit statt, wird der Regelbetrieb durch das relativ schmale Fenster des Fensterdiskriminators auf die von der Störgröße abhängige Steuerung umgeschaltet. Neben den durch Wellenbewegungen verursachten Störungen treten häufig in der Regelstrecke Schwingungen der mechanischen Bauteile (Servomotor, Federn, Zahnräder u. dgl.) auf, deren Kräfte größer sein können als die des Momentengleichgewichts. Diese Störungen gehen als Störgröße in den Istwert ein und beeinträchtigen die den Servomotor steuernde Stellgröße. Die Tastplatte kann dann nicht mehr gleichmäßig bewegt werden, und es besteht die Gefahr, daß das Meßgerät instabil wird.

Demgegenüber liegt der Erfindung die Aufgabe zugrunde, eine Schaltungsanordnung der gattungsgemäßen Art derart auszubilden, daß auf die Meßgenauigkeit schädlich einwirkende Schwingungen mechanischer Bauteile beseitigt bzw. kompensiert werden.

Diese Aufgabe wird erfindungsgemäß gelöst durch einen an die Vergleichsstufe angeschlossenen Hochpaß, dessen Ausgangssignal als Steuersignal einem im Regelkreis angeordneten verstellbaren P-Regler zugeführt wird.

Der Hochpaß läßt in Abhängigkeit von seiner Sperrgrenze die von den Schwingungen der mechanischen Bauteile erzeugten hohen Frequenzen durch und das Ausgangssignal dient nach entsprechender Umformung in einen Spannungswert dls Steuersignal eines P-Keglers, so daß die den Servomotor steuernde Stellgröße mit steigender Frequenz proportional verringert wird. Die Steuerung des P-Reglers kann analog, digital oder diskret erfolgen.

Eine einfache Ausführung sieht vor, daß der Vergleichsstufe des Regelkreises ein Absolutwertgleichrichter nachgeschaltet ist, dessen Amplitude durch die selektierte Frequenz des Hochpasses gesteuert wird. Dieser Absolutwertgleichrichter dient einerseits der Gleichrichtung des Fehlersignals und anderseits übernimmt er die Funktion eines P-Reglers. Alternativ kann auch ein zusätzlicher P-Regler, z. B. ein Spannungsregler, vorgesehen sein, der dem im Regelkreis vorhandenen Gleichrichter nachgeschaltet ist.

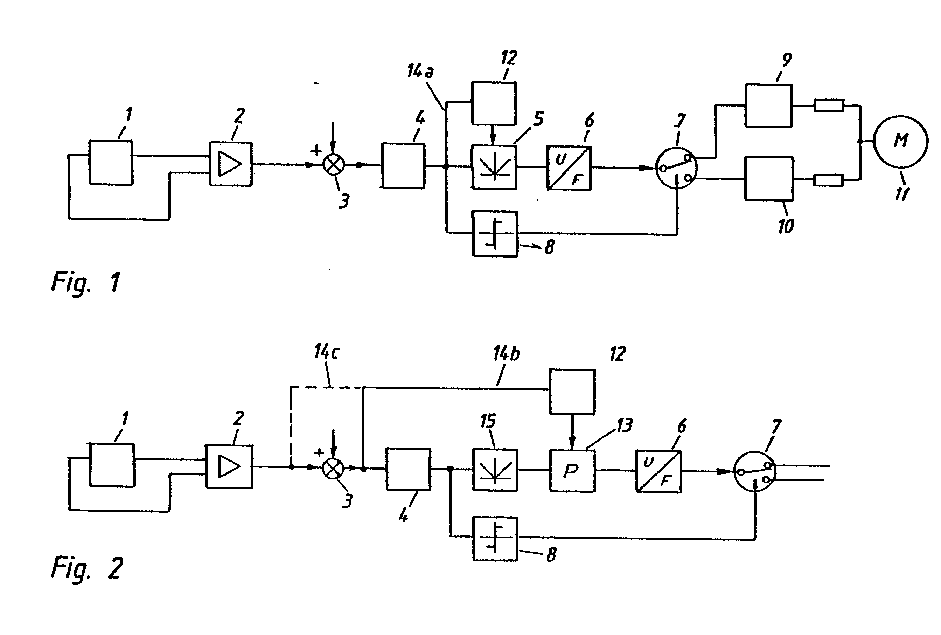

Zwei Ausführungsbeispiele der Erfindung sind in den Fig. 1 und 2 der Zeichnung dargestellt.

Die in den Fig. 1 und 2 in Blockdiagrammen gezeigten Schaltungsanordnungen sind für ein nicht dargestelltes Füllstandmeßgerät mit einer Tastplatte bestimmt, dessen Meßseil an einer mit der Antriebswelle eines Servomotors verbundenen Seiltrommel angebracht ist, und welches an die Antriebswelle angeschlossene Anzeigeeinrichtungen sowie eine Regeleinrichtung aufweist. Die Antriebswelle des Servomotors ist entweder über eine Feder an die Seiltrommel angekoppelt, oder das drehbar gelagerte Motorgehäuse ist in beiden Drehrichtungen federnd an das feste Gerätegehäuse angekoppelt, und dazwischen ist ein elektrischer Signalgeber angeordnet. Ein bei einer durch Niveauänderungen der Meßflüssigkeit verursachten Verdrehung erzeugtes Signal steuert über eine Schaltungsanordnung den Servomotor bis zur Einregelung des Momentengleichgewichts gerichtet an, wobei die Schaltungsanordnung mit Einrichtungen zur Geschwindigkeitssteuerung, Dekodierung der Drehrichter und Polaritätsansteuerung versehen ist.

Bei der in Fig. 1 gezeigten Schaltungsanordnung ist an den Signalgeber 1 bzw. dessen Vorverstärker 2 eine Vergleichsstufe 3 angeschlossen, die mit einem dem Momentengleichgewicht entsprechenden Sollwert gespeist wird. Das mittels eines Verstärkers 4 verstärkte Fehlersignal wird durch einen Gleichrichter 5 gleichgerichtet. Die dem Fehlersignal proportionale Gleichspannung wird einem Spannungs-Frequenz-Wandler 6 zugeführt, dessen Frequenz über einen Polaritätsschalter 7 zwei monostabilen Multivibratoren 9, 10 zugeführt wird, welche einen Servomotor 11 ansteuern. Der Polaritätsschalter 7 wird von einem an den Ausgang des Verstärkers 4 angeschlossenen Richtungsdekoder 8 gesteuert.

Bei der Ausführung nach Fig. 1 ist der Gleichrichter 5 als Absolutwertgleichrichter ausgebildrt, der eine proportionale Verstellung der Amplitude des gleichgerichteten Fehlersignals ermöglicht und somit einen P-Regler darstellt. Der Eingang 14a eines Hochpasses 12 ist zwischen Verstärker 4 und Absolutwertgleichrichter 5 an das Fehlersignal angeschlossen. Dieser Hochpaß 12 ist so auszuwählen bzw. einzustellen, daß er im wesentlichen nur die Frequenzen durchläßt, welche von den in der Regelstrecke entstehenden mechanischen Schwingungen der Geräteteile entstehen. Vorzugsweise soll die Grenzfrequenz unter der Resonanzfrequenz der mechanischen Regelstrecke liegen. In Abhängigkeit von der Gerätetype kommen hierfür Grenzfrequenzen zwischen etwa 1 und 25 Hz in Betracht.

Kommt es während eines Momentenausgleichs zu Schwingungen der dem Regelkreis zugehörigen Bauteile, z. B. Servomotor, Federn, Zahnräder u. dgl., die vom Signalgeber erfaßt werden und überschreiten die entsprechenden Frequenzen die Grenzfrequenz des Hochpasses 12, erzeugt dieser in Verbindung mit einer geeigneten Umformung ein proportionales Steuersignal für den Absolutwertgleichrichter 5, dessen Amplitude proportional reduziert wird. Dies führt zu einer proportionalen Anpassung der Stellgröße für den Servomotor 11.

Fig. 2 zeigt, daß der Hochpaß 12 alternativ über einen Eingang 14b auch an das unverstärkte Fehlersignal oder über einen Eingang 14c auch an das Meßsignal angeschlossen werden kann. Bei dieser Ausführung ist hinter einen einfachen Gleichrichter 5 ein P-Regler 13, z. B. ein Spannungsregler geschaltet, der in gleicher Weise die Stellgröße proportional zur Störungsfrequenz regelt.

Bei beiden Ausführungen wird der Frequenzausgang des Hochpassen 12 z. B. mittels eines Frequenzspannungswandlers (nicht dargestellt) in ein Steuersignal für den P-Regler 5 bzw. 13 umgeformt. Die Steuersignale können analog, digital oder diskret erfolgen.

## Patentansprüche

1. Schaltungsanordnung für ein Füllstandmeßgerät mit einer Tastplatte, die mit einem Meßseil an einer mit einem Servomotor (11) verbundenen Seiltrommel angeschlossen ist, wobei ein drehbar gelagertes Motorgehäuse in beiden Drehrichtungen federnd an ein festes Meßgerätegehäuse angekoppelt und dazwischen ein elektrischer Signalgeber (1) angeordnet ist, an den eine Vergleichsstufe (3) angeschlossen ist, welche ein Meßsignal mit einem dem Momentengleichgewicht entsprechenden Sollwert vergleicht und deren Fehlersignal über einen Gleichrichter (5; 15) einem Spannungs-Frequenz-Wandler (6) zugeführt wird, dessen Frequenz über einen Polaritätsschalter (7), der von einem an den Ausgang der Vergleichsstufe (3) angeschlossenen Richtungsdekoder (8) gesteuert wird, zwei der Ansteuerung des Servomotors (11) dienenden Multivibratoren (9, 10) zugeführt wird, gekennzeichnet durch einen an die Vergleichsstufe (3) angeschlossenen Hochpaß (12), dessen Ausgangssignal als Stellgröße einem im Regelkreis angeordneten verstellbaren P-Regler (5 oder 13) zugeführt wird.

2. Schaltungsanordnung nach Anspruch 1, dadurch gekennzeichnet, daß der Vergleichsstufe (3) ein Absolutwertgleichrichter (5) nachgeschaltet ist, der von dem Hochpaß (12) gesteuert wird.

3. Schaltungsanordnung nach Anspruch 1, dadurch gekennzeichnet, daß der P-Regler (13) dem Gleichrichter (15) nachgeschaltet ist.

## Claims

1. A circuit arrangement for a level meter, comprising a sensor plate connected via a metering cable to a cable drum connected to a servomotor (11), a rotatably mounted motor housing being coupled to a fixed meter housing so as to be resilient in both directions of rotations, with an electrical signal transmitter (1) therebetween, a comparator stage (3) being connected to the said transmitter and comparing a measurement signal with a set-value corresponding to equilibrium of forces and its error signal being fed via a rectifier (5; 15) to a voltage-frequency converter (6), the frequency of which is fed, via a polarity switch (7) controlled by a direction decoder (8) connected to the output of the comparator stage (3), to two multivibrators (9, 10) serving to trigger the servomotor (11), characterised by a high-pass filter (12) which is connected to the comparator stage (3) and the output signal of which is fed as a manipulated variable to an adjustable P-controller (5 or 13) disposed in the control circuit.

2. A circuit arrangement according to claim 1, characterised in that the comparator stage (3) is followed by an absolute value rectifier (5) which is controlled by the high-pass filter (12).

3. A circuit arrangement according to claim 1, characterised in that the P-controller (13) is disposed after the rectifier (15).

## Revendications

1. Montage pour un appareil de mesure du niveau, avec une plaque détectrice qui est raccordée à l'aide d'un câble de mesure à un tambour à câble qui est relié à un servomoteur (11), du type dans lequel un carter de moteur qui est monté à rotation est accouplé de façon élastique dans les deux sens de rotation à un boîtier fixe d'un appareil de mesure, avec interposition d'un générateur de signaux électriques (1), auquel est relié un étage comparateur (3) qui compare un signal de mesure avec une valeur de consigne qui correspond à l'équilibre des moments et dont le signal d'erreur est appliqué, par l'intermédiaire d'un redresseur (5; 15), à un convertisseur tension-fréquence (6) dont la fréquence est appliquée, par l'intermédiaire d'un interrupteur de polarité (7) qui est commandé par un décodeur de sens (8), à deux multivibrateurs (9, 10) servant à commander le servomoteur (11), caractérisé par un filtre passe-haut (12) relié à l'étage comparateur (3) et dont le signal de sortie est appliqué, en tant que grandeur de réglage, à un régulateur proportionnel réglable (5 ou 13) disposé dans le circuit de réglage.

2. Montage selon la revendication 1, caractérisé par le fait qu'en aval de l'étage comparateur (3) est prévu un redresseur de valeur absolue (5) qui est commandé par un filtre passe-haut (12).

3. Montage selon la revendication 1, caractérisé par le fait que le régulateur proportionnel (13) est monté en aval du redresseur (15).

Fig. 1

Fig. 2